Europäisches Patentamt

European Patent Office

Office européen des brevets

(11) Veröffentlichungsnummer: **0 372 171 B1**

(12) **EUROPÄISCHE PATENTSCHRIFT**

(45) Veröffentlichungstag der Patentschrift: **27.10.93**

(21) Anmeldenummer: **89116307.3**

(22) Anmeldetag: **04.09.89**

(51) Int. Cl.⁵: **B60H 1/00**

(54) **Klimaanlage.**

(30) Priorität: **31.10.88 DE 3836991**

(43) Veröffentlichungstag der Anmeldung:
**13.06.90 Patentblatt 90/24**

(45) Bekanntmachung des Hinweises auf die
Patenterteilung:
**27.10.93 Patentblatt 93/43**

(84) Benannte Vertragsstaaten:
**DE FR GB IT SE**

(56) Entgegenhaltungen:
DE-A- 2 939 954
DE-A- 3 217 825
DE-A- 3 820 431

PATENT ABSTRACTS OF JAPAN vol. 12, no.
257 (M-719)(3104) 20 Juli 1988, & JP-A-63
41226 (MAZDA MOTOR CORP) 7 August
1986,

(73) Patentinhaber: **Dr.Ing.h.c. F. Porsche Aktien-gesellschaft**
**Porschestrasse 42**
**D-70435 Stuttgart(DE)**

(72) Erfinder: **Burst, Hermann, Dipl.-Ing.**
**Telemannstrasse 4**
**D-7255 Rutesheim(DE)**
Erfinder: **Gaigl, Dietmar, Dipl.-Ing.**
**Kantstrasse 26**
**D-7250 Leonberg(DE)**
Erfinder: **Petri, Horst, Dipl.-Ing.**
**Kelterstrasse 10**
**D-7251 Hemmingen(DE)**
Erfinder: **Pross, Walter, Dipl.-Ing.**
**Parkstrasse 23**
**D-7032 Sindelfingen(DE)**
Erfinder: **Ritter, Bernhard, Dipl.-Ing.**
**Bayernstrasse 31**
**D-7530 Pforzheim(DE)**

## Beschreibung

Die Erfindung betrifft eine Klimaanlage für ein vorzugsweise luftgekühltes Fahrzeug.

Nach der DE 38 24 794 A1 ist eine Klimaanlage für ein vorzugsweise luftgekühltes Fahrzeug geschaffen, an der Vorkehrungen getroffen sind, welche wechselnde Warmlufttemperaturen oder Volumenschwankungen schnell ausgleichen, so daß im Fahrgastraum eine gleichbleibende Temperatur herrscht.

Aus der DE 32 17 825 A1 ist eine Klimaanlage für ein luftgekühltes Fahrzeug bekannt, die eine Steuerschaltung zur Regelung der in eine Mischkammer eintretenden Luftströme und der Temperaturschichtung in der Mischkammer aufweist. Hierzu umfaßt die Steuerschaltung je einen in der Mischkammer angeordneten Temperatur- und Druckfühler sowie einen im Fahrgastraum angeordneten Sollwertsteller und einen innenraumtemperaturfühler, ein Steuergerät und Stellglieder zur Betätigung von Klappen in Zuströmkanälen zur Mischkammer und einer Trennwand in der Mischkammer.

Dies wird in erster Linie dadurch erreicht, daß Warmluft und/oder Frischluft und/oder Umluft bzw. über einen Verdampfer einer Klimaanlage gekühlte Frischluft oder Umluft gemeinsam zumindest einem Gebläse zugeführt, in diesem verwirbelt und vermischt wird, und die vermischte Luft anschließend über einzelne Ausgangskanäle dem Fahrgastraum zugeführt wird; ein nach dem Gebläse angeordneter Ausblastemperaturfühler fragt die Temperaturabweichung (DELTA_T) der vermischten Luft von einer Solltemperatur ab und korrigiert gegebenenfalls selbsttätig die Stellung einer vor dem Gebläse vorgesehenen Temperaturmischklappe.

Es ist Aufgabe der Erfindung, die Steuerung einer derartigen Klimaanlage, insbesondere hinsichtlich des Ausgleichs von Volumenstromschwankungen, weiter auszubauen.

Die Aufgabe ist durch die Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß Schwankungen des den Fahrgastraum durchsetzenden Luft-Volumenstroms praktisch ausgeglichen sind.

Dies wird in erster Linie dadurch erreicht, daß ein Steuergerät einer Klimaanlage eine Fahrgeschwindigkeit des Kraftfahrzeugs sowie eine Stellung einer Temperaturmischklappe, eine Gebläsedrehzahlstufe eines Gebläses und einen Schaltzustand einer Elektromagnetkupplung eines Kältemittelkompressors erfaßt und eine Sollstellung einer Frischluftklappe in Abhängigkeit von diesen Einflußgrößen ermittelt und einstellt. Die Steuerung ist ferner um einige wichtige Sicherheits- und Notfunktionen erweitert, welche auch bei Störungen von einzelnen Komponenten der Klimaanlage einen eingeschränkten Betrieb zulassen.

Die Erfindung ist beispielhaft anhand von Zeichnungen erläutert und nachstehend näher beschrieben.
Es zeigt

Fig. 1    eine schematische Darstellung der Klimaanlage,

Fig. 2    ein Blockschaltbild einer Steuerung der Klimaanlage,

Fig. 3    ein Flußdiagramm eines Hauptprogramms der Steuerung der Klimaanlage,

Fig. 4    ein Flußdiagramm nach Fig. 3, jedoch für die Steuerung einer Frischluftklappe,

Fig. 5    ein Fahrgeschwindigkeits-Sollstellungs-Diagramm für eine Frischluftklappe,

Fig. 6    ein Zeit-Sollstellungs-Diagramm für eine Frischluftklappe,

Fig. 7    ein Diagramm nach Fig. 5, jedoch für einen anderen Betriebszustand der Klimaanlage,

Fig. 8    ein Diagramm nach Fig. 7, jedoch für einen weiteren Betriebszustand der Klimaanlage,

Fig. 9    ein Flußdiagramm nach Fig. 3, jedoch für den Steuerablauf eines Heizgebläses,

Fig. 10   ein Flußdiagramm nach Fig. 3, jedoch für den Steuerablauf eines Kondensatorgebläses.

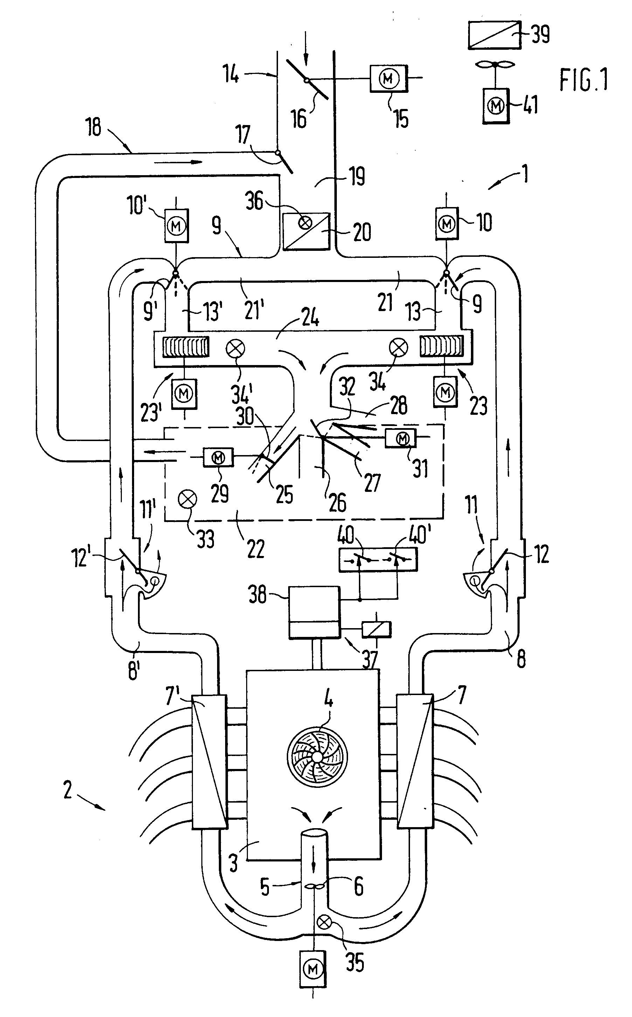

In Fig. 1 ist mit 1 eine Klimaanlage eines Kraftfahrzeugs mit einer (in nicht notwendigerweise) im Heck 2 angeordneter luftgekühlter Brennkraftmaschine 3 mit einem Motorkühlgebläse 4, welches Frischluft zur Kühlung der Brennkraftmaschine 3 in den Motorraum fördert, gezeigt. Ein Teil der vom Motorkühlgebläse 4 angesaugten (und von Teilen der Brennkraftmaschine vorgewärmten) Luft wird über ein Zuströmrohr 5 von einem elektrischen Heizungsgebläse 6 Abgas-/Luft-Wärmetauschern 7, 7′ zugeführt, wozu sich das Zuströmrohr 5 nach dem Heizungsgebläse zweisträngig aufteilt. In den Wärmetauschern 7, 7′ wird die im Abgas der Brennkraftmaschine 3 enthaltene Verlustwärme auf die Luft im Zuströmrohr 5 übertragen.

Von den Wärmetauschern 7, 7' ausgehend sind Warmluftkanäle 8, 8' vorgesehen, welche die erwärmte Luft zu Temperaturmischklappen 9, 9' führen; die Temperaturmischklappen 9, 9' sind über Elektromotoren 10, 10' (Getriebemotoren) verstellbar.

In den beiden Warmluftkanälen 8, 8' ist nach den Wärmetauschern 7, 7' je ein Klappenkasten 11, 11' mit einer differenzdruckgesteuerten Klappe 12, 12' angeordnet, so daß die Warmluft bei geöffneten Temperaturmischklappen 9, 9' entweder in die den Temperaturmischklappen 9, 9' nachfolgenden Kanäle 13, 13' oder bei teilweise geöffneten oder geschlossenen Temperaturmischklappen 9, 9' über die Klappenkästen 11, 11' (erhöhter Differenzdruck) teilweise oder vollständig ins Freie geleitet werden kann.

Ein Frischluftkanal 14 mit einer über einen Elektromotor 15 (Getriebemotor) gesteuerten Frischluftklappe 16 mündet zusammen mit einem über eine druckbetätigte Umluftklappe 17 verschlossenen Umluftkanal 18 in einen Kaltluftstrang 19, welcher sich nach einem Verdampfer 20 in zwei zu den Temperaturmischklappen 9, 9' hin führenden Abschnitten 21, 21' aufteilt.

Der Umluftkanal 18 verbindet den Kaltluftstrang 19 mit dem Fahrgastraum 22, wobei die Umluftklappe 17 bei geschlossener Frischluftklappe 16 und laufenden, den Kanälen 13, 13' nachgeschalteten elektromotorischen Gebläsen 23, 23' selbsttätig öffnet (Flatterventil). Die Gebläse 23, 23' vermischen die über die Abschnitte 21, 21' des Kaltluftstrangs 19 und die Warmluftkanäle 8, 8' herangeführten kalten bzw. warmen Luftströme und fördern sie in eine Druckkammer 24.

Von der Druckkammer 24 führen Ausgangskanäle 25, 26, 27 und 28 zu Ausströmern in den Fahrgastraum 22. Der Ausgangskanal 25 ist über eine (mittels eines Elektromotors 29 betätigte) Fußraumklappe 30 verschließbar. Über eine (mittels eines Elektromotors 31 gesteuerte) Defrosterklappe 32 ist eine Luftverteilung zu dem zu einer Defrosterdüse führenden Ausgangskanal 27 und zu dem zu den Mitteldüsen führenden Ausgangskanal 26 steuerbar. Der Ausgangskanal 28 führt zu (nicht notwendigerweise) manuell verstelbaren Seitendüsen (nicht gezeigt).

Die Klimaanlage 1 umfaßt ferner verschiedene Temperatursensoren, nach deren Signalen die Klimaanlage gesteuert/geregelt wird:

- ein Fahrgastraum-Temperaturfühler 33
- je ein den Gebläsen 23, 23' nachgeschalteter Ausblastemperaturfühler 34, 34',
- ein dem Heizungsgebläse 6 nachgeschalteter Warmluftemperatursensor 35 und
- ein im Verdampfer 20 angeordneter Verdampfer-Temperaturfühler 36.

Die Klimaanlage 1 umfaßt ferner noch einen von der Brennkraftmaschine 3 über eine Elektromagnetkupplung 37 angetriebenen Kältemittelkompressor 38, einen im Bugbereich des Fahrzeugs angeordneten Kondensator 39 und einen Kältemitteldrucksensor 40, 40'. Der Kondensator 39 wird über ein Kondensatorgebläse 41 zwangsbelüftet.

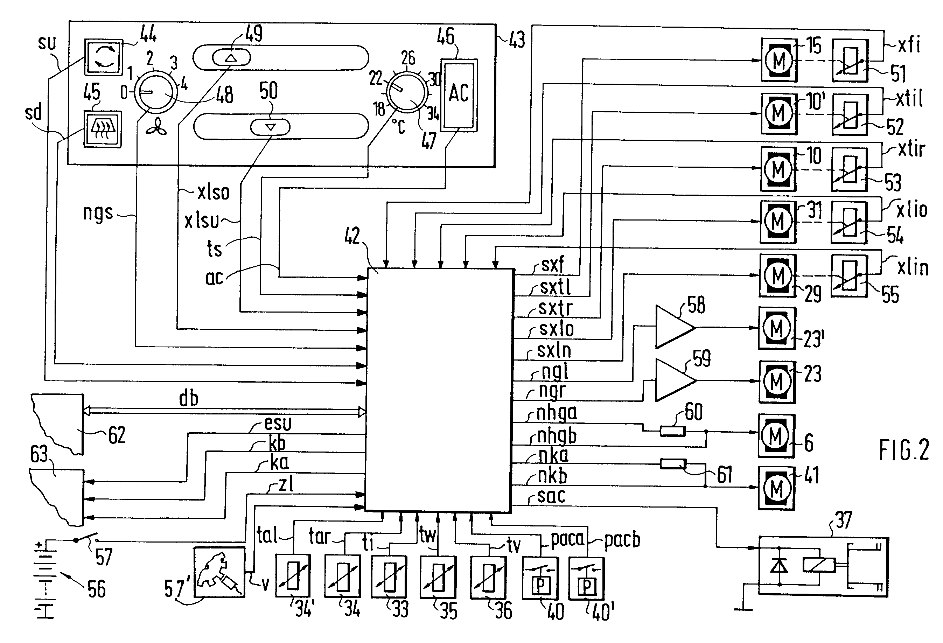

Auf die Darstellung der elektrischen Verschaltung der elektrischen Vorrichtungen untereinander und mit einem Steuergerät und die Abbildung der Kältemittelkreisläufe wurde aus Gründen der besseren Übersichtlichkeit verzichtet. Erstere wird nun anhand des Blockschaltbilds nach Fig. 2 beschrieben, während zweitere üblichem Kraftfahrzeugstandard entspricht.

In Fig. 2 ist ein bevorzugt auf der Basis eines Mikrorechners aufgebautes Steuergerät 42 gezeigt; dieses kann über eine in einer Schalttafel des Kraftfahrzeugs angeordneten Bedieneinheit 43 von einem Fahrzeugführer mit Sollwerten su, sd, ngs, xlso, xlsu, ts und ac beaufschlagt werden.

Hierzu kann über schaltende Bedienelemente

- eine Wahlstellung Umluftbetrieb (Umlufttaste 44, Sollsignal Umluft su),
- eine Wahlstellung Defrostbetrieb (Defrosttaste 25, Sollsignal Defrost sd),
- eine Wahlstellung Klimabetrieb (Klimataste 46, Sollsignal Klima ac),

betätigt werden.

Über willkürlich einstellbare Bedienelemente (Potentiometer) sind Sollwerte für die

- Solltemperatur ts im Fahrgastraum (Temperatursteller 47),
- Gebläsedrehzahlstufe ngs (Gebläsedrehzahlsteller 48),
- Solluftverteilung Kopfraum xlso (Steller 49),
- Solluftverteilung Fußraum xlsu (Steller 50),

vorgebbar.

Das Steuergerät 42 erfaßt Signale

- tal vom Ausblastemperaturfühler 34',
- tar vom Ausblastemperaturfühler 34,
- ti vom Fahrgastraumtemperaturfühler 33,
- tw vom Warmlufttemperatursensor 35,
- tv vom Verdampfertemperaturfühler 36,
- paca vom Kältemitteldrucksensor 40,
- pacb vom Kältemitteldrucksensor 40',

sowie Stellungssignale von Positionsgebern (-potentiometern)

- xfi des Frischluftklappenstellungs-Positionsgebers 51,
- xtil des Temperaturmischklappenstellungs-Positionsgebers links, 52,
- xtir des Temperaturmischklappenstellungs-Positionsgebers rechts, 53,
- xlio des Defrostklapennstellungs-Positionsgebers 54,
- xliu des Fußraumklappenstellungs-Positionsgebers 55,

und von einem mit einer Batterie 56 verbundenen Zündschalter 57 (Zündsignal ze) und von einem Fahrgeschwindigkeitsgeber 57' des Fahrzeugs (Fahrgeschwindigkeit v).

Das Steuergerät 42 steuert über ein Steuersignal

- sxf den Elektromotor 15 der Frischluftklappe 16

- sxtl den Elektromotor 10' der Temperaturmischklappe 9'
- sxtr den Elektromotor 10 der Temperaturmischklappe 9
- sxlo den Elektromotor 31 der Defrostklappe 32
- sxlu den Elektromotor 29 der Frischluftklappe 30
- ngl (mittels einer Endstufe 58) das Gebläse 23'
- ngr (mittels einer Endstufe 59) das Gebläse 23
- nhga und einen Vorwiderstand 60 das Heizgebläse 6
- nhgb das Heizgebläse 6 direkt
- nka und einen Vorwiderstand 61 das Kondensatorgebläse 41
- nkb das Kondensatorgebläse 41 direkt
- sac die Elektromagnetkupplung 37 des Kältemittelkompressors 38.

Schließlich kann das Steuergerät 42 noch über einen Diagnosebus db mit einem Diagnoserechner 62 kommunizieren und an ein Motormanagementsteuergerät 63 ein Unterbindungsignal esu zur Unterbindung einer Schubabschneidung bei weit geöffneten Temperaturmischklappen (siehe hierzu eine von der Anmelderin am selben Tag am deutschen Patentamt hinterlegte Patentanmeldung mit dem Titel "Klimatisierungsvorrichtung für ein Kraftfahrzeug") sowie ein Klimabereitschaftssignal kb und ein Klimaschaltsignal ka (Elektromagnetkupplung 37 geschlossen) für eine Leerlauffüllungsregelung abgeben.

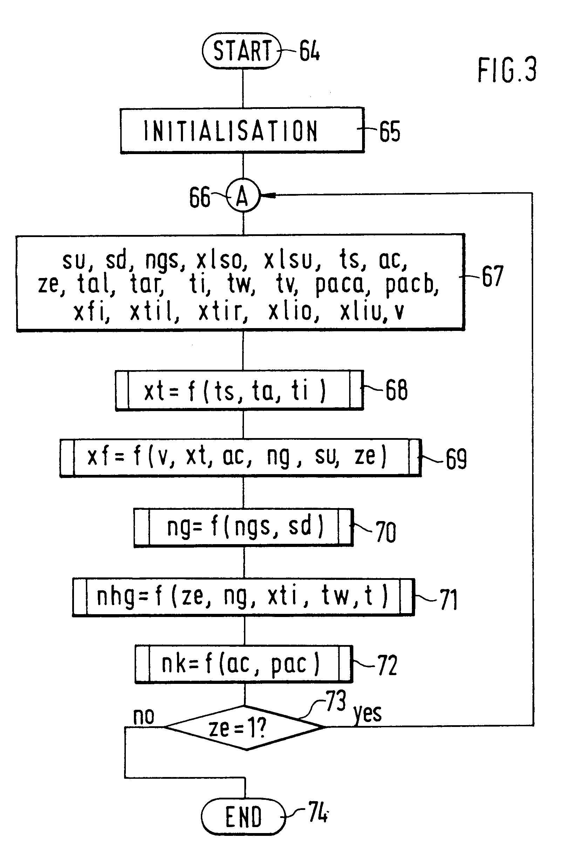

In Fig. 3 ist ein Flußdiagramm eines Steuerprogramms für das Steuergerät 42 der Klimaanlage 1 gezeigt. Nach dem Start 64 des Programms und einer Initialisierung 65 des Rechners erfolgt nach Passieren einer Marke A, 66, eine Erfassung 67 der Sollwerte su, sd, ngs, xlso, xlsu, ts und ac sowie der Meßwerte (Schaltsignale) ze, tal, tar, ti, tw, tv, paca, pacb, xfi, xtil, xtir, xlio, xliu und v.

Anschließend wird in einem Unterprogramm 68 aus dem Temperatursollwert ts und den Meßwerten ta (tal, tar) der Ausblastemperaturfühler 34', 34 und ti des Fahrgastraumtemperaturfühlers 33 die Stellung xt der Temperaturmischklappen errechnet und eingestellt. Dieses Unterprogramm 68 soll jedoch hier nicht näher betrachtet werden.

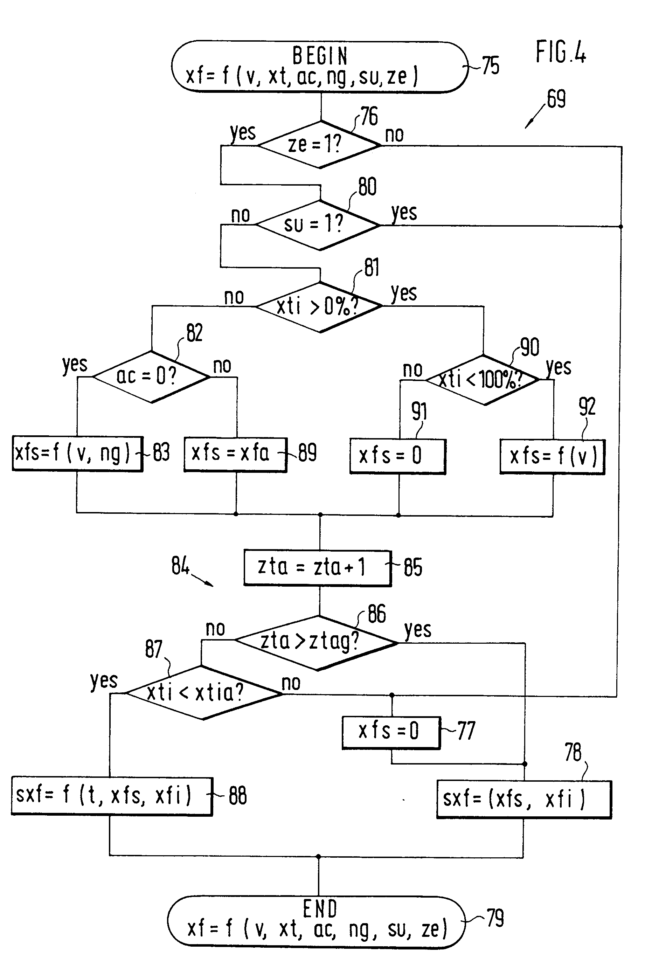

Ein anhand von Fig. 4 näher erläutertes Unterprogramm 69 errechnet aus der Fahrgeschwindigkeit v, der Stellung der Temperaturmischklappe(n) xt, dem Sollsignal Klima ac, der Gebläsedrehzahlstufe ng, dem Sollsignal Umluft su und dem Zündungssignal ze die Stellung xf der Frischluftklappe 16 und stellt diese ein.

Ein Unterprogramm 70 bestimmt aus der Gebläsesolldrehzahl ngs und dem Sollsignal Defrost sd die Gebläsedrehzahlstufe ng und stellt diese ein: ist sd = 0, so ist ng = ngs; im Defrostbetrieb (sd = 1) wird ng auf maximale Drehzahl gesteuert (ng = ngmax).

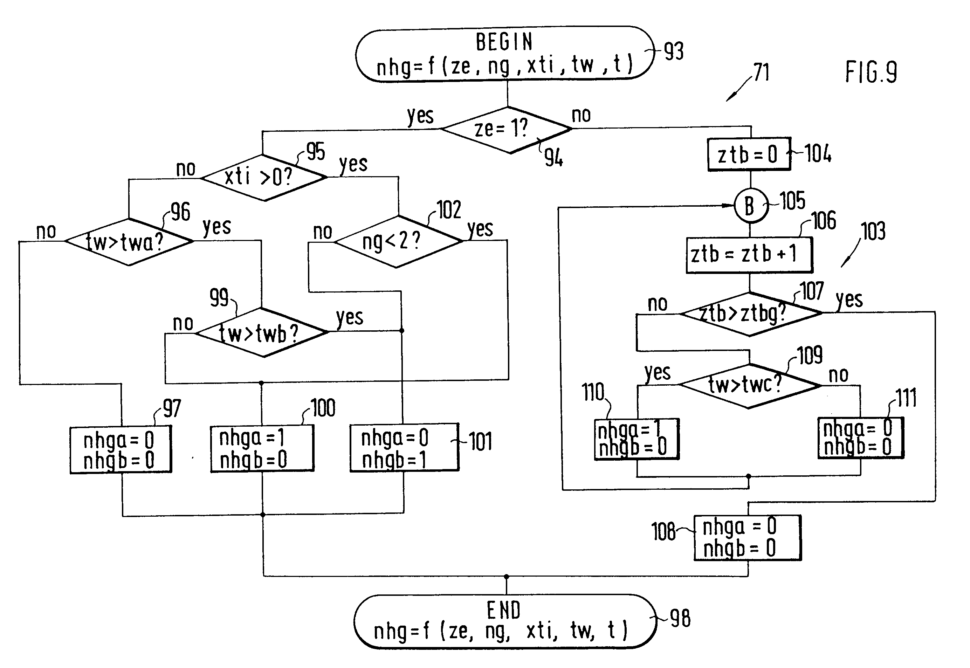

Ein Unterprogramm 71 bestimmt die Ansteuerung des Heizgebläses 6 aufgrund des Zündsignals ze, der Gebläsedrehzahlstufe ng, der Temperaturmischklappenstellung xti, des Signals tw des Warmlufttemperatursensors 35 und der Zeit t (Nachlaufzeit nach Abschalten der Zündung). Dieses Unterprogramm 71 wird anhand von Fig. 9 näher erläutert.

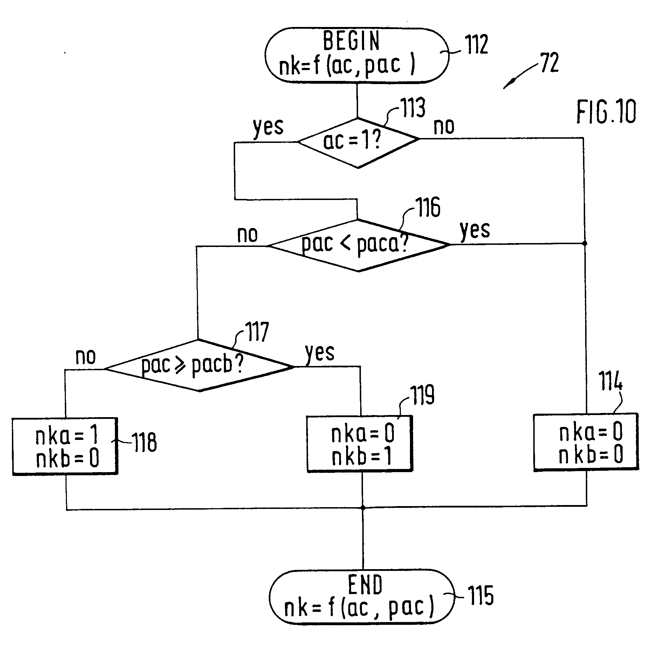

Ein Unterprogramm 72 übernimmt die Ansteuerung des Kondensatorgebläses 41 aufgrund des Klimasignals ac und des Signals pac (paca, pacb) der Kältemitteldrucksensoren 40, 40'. Es wird anhand von Fig. 10 dargelegt.

Schließlich erfolgt eine Abfrage 73, ob die Zündung der Brennkraftmaschine an ist; wenn ja, wird der Programmdurchlauf bei Marke A, 66 erneut gestartet, wenn nein, alle Systeme abgeschaltet, die Frischluftklappe 16 geschlossen (zum Verhindern des Eindringens von Wasser in das Fahrzeug in Waschanlagen) und das Programm beendet, 74.

Bei dem in Fig. 4 beschriebenen Programm zur Steuerung der Frischluftklappe 16 erfolgt nach dem Programmstart 75 eine Abfrage 76, ob die Zündung eingeschaltet ist (ze = 1); wenn nein, wird ein Sollwert xfs für die Stellung der Temperaturmischklappe zu Null gesetzt (Frischluftklappe schließen, 77) und das Steuergerät sxf zur Ansteuerung des Motors 15 der Frischluftklappe 16 entsprechend der Regeldifferenz xfs-xfi bestimmt, an den Motor (oder einen zwischengeschalteten, nicht näher beschriebenen Lageregelkreis) ausgegeben, 78 und das Programm beendet, 79.

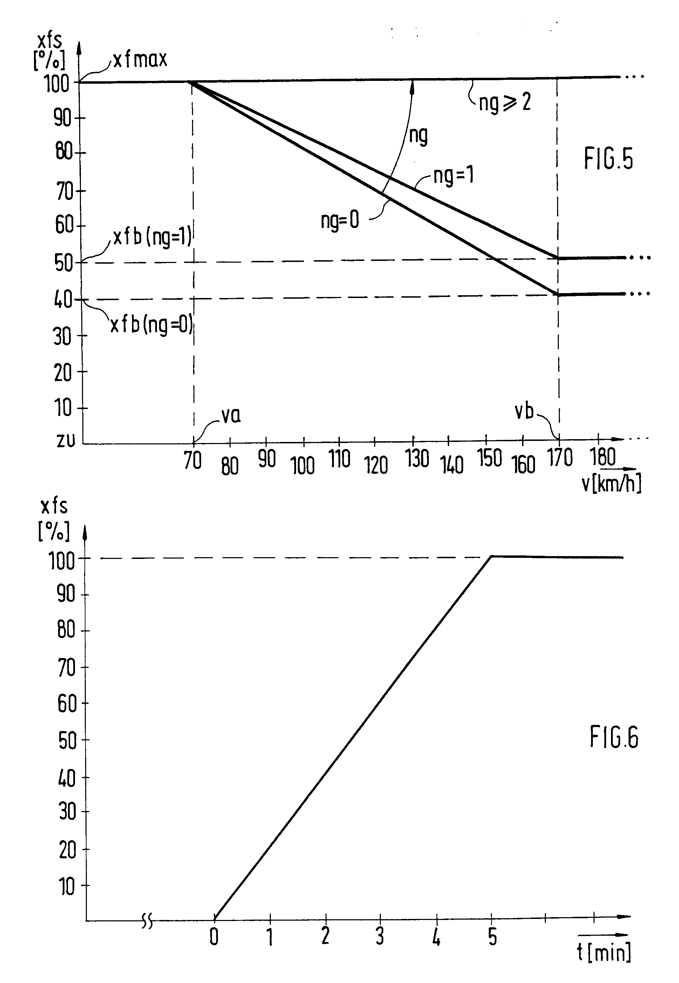

Ist die Zündung an, 76, so wird geprüft, ob das Sollsignal Umluft su gesetzt ist (su = 1) 80; wenn ja, wird das Programm mit Programmschritt 77 fortgesetzt (Frischluftklappe schließen), wenn nein, wird abgefragt, ob die Temperaturmischklappe geöffnet ist (xti>0 d.h., ob wenigstens eine der beiden Temperaturmischklappen geöffnet ist), 81; wenn nein, wird abgefragt, ob ac = 0 ist, 82. Ist ac = 0 (Elektromagnetkupplung 37 geöffnet) so erfolgt die Ermittlung der Sollstellung xfs aus der Fahrgeschwindigkeit v und der Gebläsedrehzahlstufe ng entsprechend Fig. 5. Anschließend wird innerhalb eines "Kaltstarts-Timers" 84 eine bei Start der Brennkraftmaschine 3 im Programmschritt 65 des Hauptprogramms nach Fig. 3 zu Null gesetzte Zählgröße zta um 1 erhöht, 85 und geprüft, 86, ob diese bereits eine Grenze ztag überschritten hat (Aufwärmphase beendet).

Ist dies der Fall, wird der Sollwert xfs entsprechend Programmschritt 78 eingestellt, wenn nein, geprüft, 87, ob die Stellung der Temperaturmischklappe (eine der beiden oder beide) kleiner als ein bestimmter Grenzwert xtia (beispielsweise 55 % der Maximalstellung offen) ist, wenn nein, wird mit Programmschritt 77 fortgefahren, wenn ja, wird das Steuersignal - außer von der Regelabweichung xfs-xti - auch noch, von der Zeit abhängig, ensprechend Fig. 6 bestimmt, 88 und das Programm beendet, 79; die Höhe des Zählerstandes zta ist hierbei im Maß für die seit dem Start vergangene Zeit t.

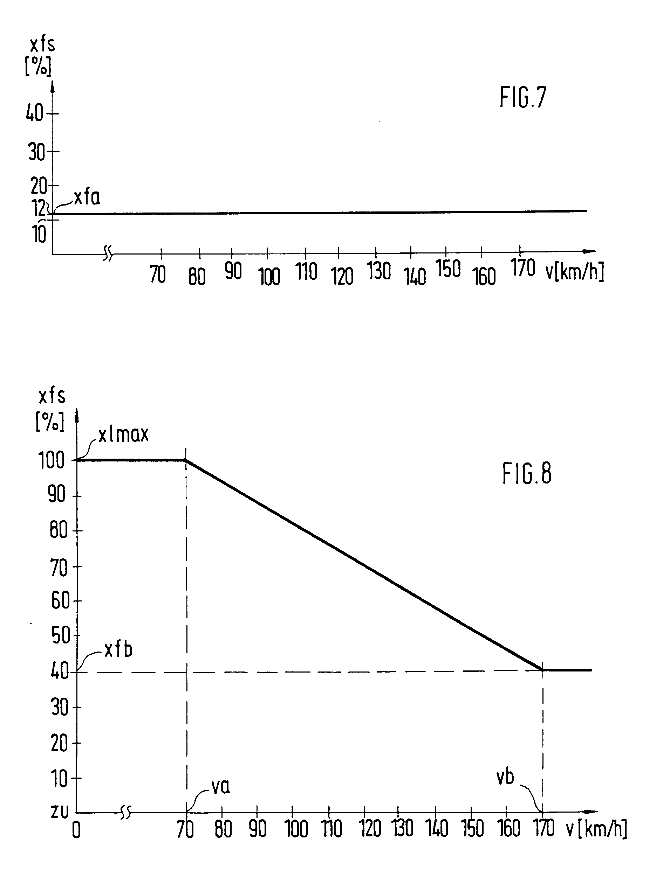

Ist die Abfrage 82 negativ (Klimaanlage eingeschaltet), so wird der Sollwert xfs auf einen Wert xfa (beispielsweise 12 % Öffnung) entsprechend Fig. 7 eingestellt (Klimabetrieb mit ständigem Ersatz einer bestimmten Menge an Umluft), 89 und das Programm mit Programmschritt 85 fortgesetzt.

Ist die Abfrage 81 positiv, so wird in einer weiteren Abfrage geprüft, ob die Temperaturmischklappe noch nicht vollständig geöffnet ist, 90. Ist dies nicht der Fall, (maximal heizen), wird der Sollwert xfs zu Null gesetzt, 91, ist dies der Fall, wird der Sollwert entsprechend Fig. 8 aus der Fahrgeschwindigkeit v bestimmt, 92; in beiden Fällen wird das Programm mit Programmschritt 85 fortgesetzt.

In Fig. 5 ist ein Fahrgeschwindigkeits-Frischluftklappen- Sollstellungs-Diagramm gezeigt, das die Funktion $xfs = f (v, ng)$ entsprechend Programmschritt 83 wiedergibt. Dieses Diagramm und auch die nachfolgenden Diagramme entsprechend Fig. 6 bis Fig. 8 können im Rechner in Form von Tabellen abgelegt sein. Hierbei werden aus den Abszissenwerten Adressen für Speicherzellen gebildet, aus welchen letztendlich die Funktionswerte (Ordinatenwerte) der Funktionen ausgelesen werden können (Kennlinienfeld, Look-up-table). Selbstverständlich können die Ordinatenwerte der in den Diagrammen abgebildeten Geradenzüge auch algebraisch berechnet werden.

In Fig. 5 sind drei Beispiele aus einer Schar von Geradenzügen gezeigt. Welcher Geradenzug letztendlich für die Berechnung der Stellung der Frischluftklappe herangezogen wird, wird durch den Parameter Gebläsedrehzahlstufe ng bestimmt. In einem unteren Geschwindigkeitsbereich $0 \leq v < va$ ist die Frischluftklappe vollständig geöffnet (xfmax entspricht 100 %). In einem mittleren Geschwindigkeitsbereich $va \leq v < b$ wird die Frischluftklappensollstellung mit wachsender Geschwindigkeit zunehmend bis zu einem Wert xfb herab geschlossen und verharrt in einem daran anschließenden höheren Geschwindigkeitsbereich $v \geq vb$ auf diesem Wert. Der Wert xfb ist allerdings (nichtlinear) von der Drehzahlstufe abhängig; bei einer Drehzahlstufe $ng = 0$ entsprechend der Minimaldrehzahl ngmin entspricht dieser Wert xfb etwa 40 %. Mit wachsenden Drehzahlstufen nimmt der Wert xfb höhere Werte an, bis ab einer Drehzahlstufe $ng > 2$ die Frischluftklappe - geschwindigkeitsunabhängig - vollständig geöffnet bleibt.

In Fig. 6 ist anhand eines Zeit-Frischluftklappenstellungs-Diagramms gezeigt, wie die Frischluftklappe in einer Aufwärmphase der Brennkraftmaschine 3 innerhalb eines bestimmten Zeitraums auf ihren Sollwert hochgefahren wird, wobei hier angenommen ist, daß die anzufahrende Frischluftklappensollstellung dem Wert xfmax von 100 % entspricht.

Fig. 7 zeigt die Frischluftklappensollstellung bei Klimabetrieb entsprechend Programmpunkt 89 nach Fig. 4; hierbei wird die Frischluftklappensollstellung geschwindigkeitsunabhängig auf einen Wert xfa von beispielsweise 12 % eingestellt.

Fig. 8 zeigt ein Fahrgeschwindigkeits-Frischluftklappensollstellungs-Diagramm entsprechend Programmschritt 92 von Fig. 4 bei teilweise geöffneter Temperaturmischklappe; der abgebildete Geradenzug ist hier unabhängig von der Gebläsedrehzahlstufe ng und entspricht im wesentlichen dem in Fig. 5 gezeigten Geradenzug für die Gebläsedrehzahlstufe $ng = 0$.

In Fig. 9 ist der Steuerablauf 71 für das Heizgebläse dargestellt.

Nach dem Programmstart 93 erfolgt eine Abfrage 94, ob die Zündung eingeschaltet ist ($ze = 1$). Ist dies der Fall, so wird abgefragt, ob (eine der beiden) Temperaturmischklappen geöffnet ist, 95; wenn nein, wird abgefragt, ob das Signal tw vom Warmlufttemperatursensor eine untere Grenze twa überschritten hat, 96. Wenn nein, werden die Ansteuersignale nhga, nhgb zu Null gesetzt, 97 und das Programm beendet, 98.

Ist die Abfrage 96 positiv, wird abgefragt, 99, ob tw bereits eine obere Grenze twb überschritten hat; wenn nein, wird nhga zu 1 und nhgb zu Null gesetzt (niedrige Drehzahlstufe), 100, wenn ja, nhga zu Null und nhgb zu 1 (hohe Drehzahlstufe), 101.

Ist die Abfrage 95 negativ, so wird abgefragt, ob die Gebläsedrehzahlstufe kleiner als ein bestimmter Wert ($ng = 2$), 102. Wenn nein, wird mit Programmschritt 101 fortgefahren, wenn ja mit Programmschritt 100.

Ist die Abfrage 94 negativ (Zündung aus), so wird ein Nachlauf-(zeit-)zähler ztb zu Null gesetzt ($ztb = 0$), 104 und nach Passieren einer Marke B, 105 der Zähler ztb um 1 erhöht, 106 und abgefragt, 107, ob ztb bereits einen für das Ende der Nachlaufzeit (beispielsweise ca. 20 Min.) charakteristischen Zählerstand ztbg erreicht hat; wenn ja, wird nhga und nhgb zu Null gesetzt, 108 und das Programm beendet, 98, wenn nein, wird abgefragt, ob tw eine Grenztemperatur twc überschritten hat, 109. Wenn ja, wird nhga zu 1 und nhgb zu Null gesetzt, 110, wenn nein, nhga und nhgb zu Null gesetzt, 111; in beiden Fällen wird zur Marke B zurückgeschleift.

Schließlich ist in Fig. 10 ein Programm zur Steuerung des Kondensatorgebläses 41 gezeigt. Nach dem Programmstart, 112, wird abgefragt, ob das Klimasignal aktiv ist (ac = 1, Elektromagnetkupplung geschlossen), 113. Ist dies nicht der Fall, wird nka (niedrige Drehzahlstufe) und nkb (hohe Drehzahlstufe) zu Null gesetzt, 114 und das Programm beendet, 115.

Ist die Abfrage 113 positiv, so wird geprüft, ob der Kältemitteldruck pac bereits einen ersten Grenzwert paca noch nicht erreicht hat, 116; wenn ja, wird mit Programmschritt 114 fortgefahren, wenn nein, abgefragt, 117, ob pac einen zweiten Grenzwert pacb überschritten hat. Ist dies nicht der Fall, wird nka zu 1 und nkb zu Null gesetzt, 118; ist Abfrage 117 positiv, wird nka zu Null und nkb zu 1 gesetzt, 119 und jeweils das Programm beendet, 115.

Die in der Beschreibung angegebenen Werte, beispielsweise für die Geschwindigkeit v, die Geschwindigkeitsbereiche oder für die Drosselklappensollstellung sind nur als Richtwerte gedacht. Sie hängen in hohem Maße von fahrzeugspezifischen Gegebenheiten und der Auslegung der Klimaanlage ab und sind auf ein einzelnes Fahrzeug experimentell abzustimmen.

In das Steuergerät 42 kann eine Überwachungsschaltung für einen Laufzustand des Heizungsgebläses integriert sein, welche bei Ausfall des Heizungsgebläses die Gebläse 23, 23' abschaltet (ng = 0). Ferner umfaßt das Steuergerät 42 eine Notfunktion, welche bei Ausfall eines Sensors lediglich die ihm jeweils zugeordnete Steuerfunktion stillsetzt oder Sensorwerte durch Festwerte ersetzt oder durch Werte anderer Sensoren approximiert.

Schließlich umfaßt das Steuergerät 42 eine nicht näher dargestellte, mittels der Defrosttaste 45 auslösbare Defrostfunktion, in der
- die Gebläsedrehzahlstufe ng auf ihren Maximalwert gesetzt wird,
- die Ausströmkanäle 25 (Fußraum) und 26 (Mitteldüsen) verschlossen werden,
- eine Solltemperatur ts auf einen bestimmten Wert (bspw. 27 °C) gesetzt und die
- Elektromagnetkupplung 37 des Kältemittelkompressors 38 angesteuert (geschlossen) wird, solange eine Verdampfertemperatur tv einen bestimmten Wert (Vereisungstemperatur, siehe hierzu eine von der Anmelderin am selben Tag beim Deutschen Patentamt hinterlegte Patentanmeldung mit dem Titel "Vereisungsschutz für einen Verdampfer einer Klimaanlage") noch nicht unterschritten hat (zur Trockung der ausgeblasenen Luft).

**Patentansprüche**

1. Klimaanlage für ein vorzugsweise luftgekühltes Fahrzeug mit einem Gehäuse, in dem ein Verdampfer, eine Kammer und zumindest ein Gebläse angeordnet sind, wobei das Gehäuse Ausgangskanäle mit einzeln absperrbaren Entfroster-, Mittel- und Fußraumdüsen aufweist, durch die wahlweise Warmluft und/oder Kaltluft in den Fahrgastraum einleitbar ist und daß das Gehäuse mit zumindest einem einen Abgaswärmetauscher enthaltenden Warmluftkanal sowie einem mit einer elektromotorisch gesteuerten Frischluftklappe versehenen Zuströmkanal für Frischluft und einem Zuströmkanal für Umluft in Verbindung steht, wobei Warmluft und/oder Frischluft und/oder Umluft bzw. über einen Verdampfer einer Klimaanlage gekühlte Frischluft oder Umluft gemeinsam zumindest einem Gebläse zugeführt, in diesem verwirbelt und vermischt wird und die vermischte Luft anschließend über einzelne Ausgangskanäle dem Fahrgastraum zugeführt wird, und ein nach dem Gebläse angeordneter Ausblastemperaturfühler die Temperaturabweichung (DELTA_T) der vermischten Luft von einer Solltemperatur abfragt und gegebenenfalls selbsttätig die Stellung einer vor dem Gebläse vorgesehenen Temperaturmischklappe korrigiert, insbesondere nach der DE 38 24 794.1, **dadurch gekennzeichnet**, daß ein Steuergerät (42) eine Fahrgeschwindigkeit (v) des Kraftfahrzeugs, sowie eine Stellung (xti) der Temperaturmischklappe (9, 9'), eine Gebläsedrehzahlstufe (ng) des Gebläses (23, 23') und einen Schaltzustand (ac) einer Elektromagnetkupplung (37) eines Kältemittelkompressors (38) erfaßt und eine Sollstellung (xfs) der Frischluftklappe (16) in Abhängigkeit von diesen Einflußgrößen (v, xti, ng, ac) ermittelt und einstellt.

2. Klimaanlage nach Anspruch 1, **dadurch gekennzeichnet**, daß das Steuergerät (42) über einen Positionsgeber (51) eine Iststellung (xfi) der Frischluftklappe (16) erfaßt und die Iststellung (xfi) der Sollstellung (xfs) nachführt.

3. Klimaanlage nach Anspruch 2, **dadurch gekennzeichnet**, daß die Sollstellung (xfs) der Frischluftklappe (16) über im Steuergerät (42) abgespeicherte Funktionstabellen (xfs = f(v, xti, ng, ac)) aus den Einflußgrößen Fahrgeschwindigkeit (v), sowie der Stellung (xti) der Temperaturmischklappe (9, 9'), der Gebläsedrehzahlstufe (ng) und dem Schaltzustand (ac) der Elektromagnetkupplung (37) des Kältemittelkompressors (38) ermittelt wird.

4. Klimaanlage nach Anspruch 2, **dadurch gekennzeichnet**, daß die Sollstellung (xfs) der Frischluftklappe (16) über im Steuergerät (42) nachgebildete Kennlinienfelder (xfs = f(v, xti, ng, ac)) aus den Einflußgrößen Fahrgeschwindigkeit (v), sowie der Stellung (xti) der Temperaturmischklappe (9, 9'), der Gebläsedrehzahlstufe (ng) und dem Schaltzustand (ac) der Elektromagnetkupplung (37) des Kältemittelkompressors (38) ermittelt wird.

5. Klimaanlage nach Anspruch 3 oder 4, **dadurch gekennzeichnet**, daß bei vollständig geöffneter Temperaturmischklappe (9, 9') (xti = xtmax) die Frischluftklappe (16) unabhängig von den weiteren Einflußgrößen (v, ng, ac) geschlossen wird (xfs = 0).

6. Klimaanlage nach wenigstens einem der vorangehenden Ansprüche, **dadurch gekennzeichnet**, daß die Frischluftklappe (16) bei eingeschalteter Elektromagnetkupplung (37) des Kältemittelkompressors (38) (ac = 1) und geschlossener Temperaturmischklappe (xti = 0) in eine erste, niedrige Stellung (xfs = xfa) gesteuert wird.

7. Klimaanlage nach Anspruch 6, **dadurch gekennzeichnet**, daß die Stellung (xfs) der Frischluftklappe (16) bei eingeschalteter Elektromagnetkupplung (37) des Kältemittelkompressors (38) (ac = 1) unabhängig von der Gebläsedrehzahlstufe (ng) und geschlossener Temperaturmischklappe (9, 9') (xti = 0) zusätzlich unabhängig von der Fahrgeschwindigkeit (v) ist.

8. Klimaanlage nach wenigstens einem der vorangehenden Ansprüche, **dadurch gekennzeichnet**, daß die Frischluftklappe (16) unabhängig vom Schaltzustand (ac = 0, ac = 1) der Elektromagnetkupplung (37) des Kältemittelkompressors (38) bei teilweise geöffneter Temperaturmischklappe (9, 9') (0<xti<xtmax) bei
  - in einem unteren Geschwindigkeitsbereich (0 ≤ v < va) liegenden Fahrgeschwindigkeiten (v) vollständig (xfs = xfmax) geöffnet,
  - in einem mittleren Geschwindigkeitsbereich (va ≤ v < vb) liegenden Fahrgeschwindigkeiten (v), von der vollständig geöffneten Stellung (xfs = xfmax) ausgehend, bis zu einer zweiten Stellung (xfi = xfb) herab, zunehmend geschlossen und bei
  - in einem oberen Geschwindigkeitsbereich (v ≥ vb) liegenden Fahrgeschwindigkeiten (v) in der zweiten Stellung

(xfi = xfb) gehalten wird.

9. Klimaanlage nach Anspruch 8, **dadurch gekennzeichnet**, daß die Stellung (xfs) der Frischluftklappe (16) bei teilweise geöffneter Temperaturmischklappe (9, 9') (0<xti<xtmax) unabhängig von der Gebläsedrehzahlstufe (ng) ist.

10. Klimaanlage nach wenigstens einem der vorangehenden Ansprüche, **dadurch gekennzeichnet**, daß die Frischluftklappe (16) unabhängig vom Schaltzustand (ac = 0, ac = 1) der Elektromagnetkupplung (37) des Kältemittelkompressors (38) bei geschlossener Temperaturmischklappe (9, 9') (xti = 0) bei
  - in einem unteren Geschwindigkeitsbereich (0 ≤ v < va) liegenden Fahrgeschwindigkeiten (v) vollständig (xfs = xfmax) geöffnet,
  - in einem mittleren Geschwindigkeitsbereich (va ≤ v < vb) liegenden Fahrgeschwindigkeiten (v), von der vollständig geöffneten Stellung (xfs = xfmax) ausgehend, bis zu einer zweiten von der Gebläsedrehzahlstufe (ng) abhängigen Stellung (xfs(vb) = f(ng)) herab, zunehmend geschlossen und bei
  - in einem oberen Geschwindigkeitsbereich (v ≥ vb) liegenden Fahrgeschwindigkeiten (v) in der von der Gebläsedrehzahlstufe (ng) abhängigen Stellung (xfs(vb) = f(ng)) gehalten wird.

11. Klimaanlage nach wenigstens einem der vorangehenden Ansprüche, **dadurch gekennzeichnet**, daß die zweite Stellung (xfs(vb) = f(ng)) der Frischluftklappe (16) außer von der Fahrgeschwindigkeit (v) lediglich innerhalb eines bestimmten Bereichs (0 ≤ ng < 2) der Gebläsestufen (ng) von der Gebläsestufe (ng) abhängig ist.

12. Klimaanlage nach Anspruch 10 oder 11, **dadurch gekennzeichnet**, daß die zweite Stellung (xfs(vb) = f(ng)) der Frischluftklappe (16) nichtlinear von der Gebläsedrehzahlstufe (ng) abhängig ist und mit wachsender Gebläsedrehzahlstufe (ng) größer wird und am Ende (ng = 2) des Bereichs (0 ≤ ng ≤ 2) den Maximalwert (xfs(vb) = xfmax) erreicht.

13. Klimaanlage nach wenigstens einem der vorangehenden Ansprüche, **dadurch gekennzeichnet**, daß die Frischluftklappe (16) bei ausgeschalteter Elektromagnetkupplung (37) des Kältemittelkompressors (38) (ac = 0) und bei geschlossener Temperaturmischklappe (xti = 0) und bei Gebläsedrehzahlstufen (ng), welche oberhalb (ng > 2) des bestimmten Bereichs der Gebläsedrehzahlstufen (0 ≤ ng < 2) liegen, vollständig geöffnet ist.

14. Klimaanlage nach wenigstens einem der vorangehenden Ansprüche, **dadurch gekennzeichnet**, daß die Frischluftklappe (16) in einer Aufwärmphase nach einem Kaltstart einer Brennkraftmaschine (3) des Kraftfahrzeugs mit einer festen zeitlichen Änderungsgeschwindigkeit (dxf/dt) auf ihre Sollstellung (xfs) geführt wird.

15. Klimaanlage nach Anspruch 14, **dadurch gekennzeichnet**, daß die Steuerung der Frischluftklappe (16) nach einem Kaltstart lediglich für einen begrenzten Zeitraum aufrecht erhalten bleibt.

16. Klimaanlage nach wenigstens einem der vorangehenden Ansprüche, **dadurch gekennzeichnet**, daß die Steuerung der Temperaturmischklappe (9, 9') vom Steuergerät (42) mit übernommen wird und wobei die Stellung (xts) der Temperaturmischklappe (9, 9') außer von der Solltemperatur (ts) und von der vom Ausblastemperaturfühler (34, 34') ermittelten Ausblastemperatur (ta) auch von einer mittels eines Fahrgastraumtemperaturfühlers (33) bestimmten Innentemperatur (ti) und/oder einer über einen Außentemperaturfühler (36) erfaßten Außentemperatur (ta) abhängt.

17. Klimaanlage nach wenigstens einem der vorangehenden Ansprüche, **dadurch gekennzeichnet**, daß die Steuerung über Bedienelemente (44-50) einer Bedieneinheit (43) mit willkürlich einstellbaren Werten für die Solltemperatur (ts), die Gebläsedrehzahlstufe (ng) und eine Luftverteilung im Fahrgastraum (22) und einer Wahlstellung (sd) (Defrost- Betrieb) zum Enteisen oder Entfeuchten von Fahrzeugscheiben, und einer Wahlstellung as für den Betrieb eines Kältemittelkompressors (38) beeinflußbar ist.

18. Klimaanlage nach Anspruch 17, **dadurch gekennzeichnet**, daß im Defrost-Betrieb
- die Gebläsestufe (ng) auf ihren Maximalwert eingestellt wird,
- eine Fußraumklappe (30) und ein Ausgangskanal (26) zu Mitteldüsen geschlossen wird,
- eine Solltemperatur (ts) auf einen bestimmten Wert gesetzt wird und

- eine Elektromagnetkupplung (37) eines Kältemittelkompressors (38) eingeschaltet wird, sofern eine Verdampfertemperatur (tv) oberhalb eines bestimmten Verdampfertemperaturwerts liegt.

19. Klimaanlage nach wenigstens einem der vorangehenden Ansprüche, **dadurch gekennzeichnet**, daß die Bedieneinheit (43) ein Bedienelement für eine Wahlstellung (su) (Umluftbetrieb) umfaßt, wobei bei angewähltem Umluftbetrieb die Frischluftklappe (16) geschlossen wird.

20. Klimaanlage nach wenigstens einem der vorangehenden Ansprüche, **dadurch gekennzeichnet**, daß ein den Warmluftkanal (8, 8') beaufschlagendes Heizungsgebläse (6) vom Steuergerät (42) gesteuert in zwei Drehzahlstufen (nhga, nhgb) betrieben wird, wobei
- bei eingeschalteter Zündung (57) einer Brennkraftmaschine (3) des Kraftfahrzeugs
  - eine erste Drehzahlstufe (nhga = 1) angesteuert wird, wenn bei wenigstens teilweise geöffneter Temperaturmischklappe (9, 9') (Heizbetrieb) das Gebläse (23, 23') mit einer niedrigeren Gebläsedrehzahlstufe (ng < 2) betrieben wird oder bei geschlossener Temperaturmischklappe (9, 9') eine von einem Warmlufttemperatursensor (35) im Warmluftkanal (8, 8') erfaßte Warmlufttemperatur (tw) in einem niedrigeren Bereich (twa < tw ≤ twb) liegt,
  - eine zweite Drehzahlstufe (nhgb = 1) angesteuert wird, wenn bei wenigstens teilweise geöffneter Temperaturmischklappe (9, 9,) (Heizbetrieb) das Gebläse (23, 23') mit einer höheren Gebläsedrehzahlstufe (ng ≥ 2) betrieben wird oder bei geschlossener Temperaturmischklappe (9, 9') eine von einem Warmlufttemperatursensor (35) im Warmluftkanal (8, 8') erfaßte Warmlufttemperatur (tw) in einem höheren Bereich (tw>twb) liegt, und
- innerhalb eines bestimmten Zeitraums (t<tmax) nach Abschalten der Zündung (57) die erste Drehzahlstufe (nhga = 1) angesteuert wird, wenn die Warmlufttemperatur (tw) einen bestimmten Grenzwert (tw>twc) überschreitet.

21. Klimaanlage nach Anspruch 20, **dadurch gekennzeichnet**, daß eine im Steuergerät (42) integrierte oder das Steuergerät (42) beeinflussende Überwachungsschaltung einen Laufzustand des Heizungsgebläses (6) überwacht und bei Ausfall des Heizungsgebläses (6) das Gebläse (23, 23') abschaltet (ng = 0).

22. Klimaanlage nach wenigstens einem der vorangehenden Ansprüche, **dadurch gekennzeichnet**, daß bei Ausfall eines Sensors (33-36, 40, 51-55) lediglich die ihm jeweils zugeordnete Steuerfunktion nicht mehr gegeben ist oder Sensorwerte durch Festwerte ersetzt oder durch Werte anderer Sensoren approximiert werden.

23. Klimaanlage nach wenigstens einem der vorangehenden Ansprüche, **dadurch gekennzeichnet**, daß ein Kondensator (20) der Klimaanlage (1) mittels eines vom Steuergerät (42) angesteuerten Kondensatorgebläses (41) zwangsbelüftet wird, wobei das Kondensatorgebläse (41) bei ausgeschalteter Elektromagnetkupplung (37) des Kältemittelkompressors (38) (ac = 0) ausgeschaltet (nk = 0) und bei eingeschalteter Elektromagnetkupplung (37) des Kältemittelkompressors (38) (ac = 1) und einem über einen das Steuergerät beeinflussenden Drucksensor (40, 40') im Kältemittelkreislauf der Klimaanlage erfaßten
- niedrigem Druckniveau (paca ≤ pac < pacb) mit niedriger Drehzahlstufe (nka = 1),
- hohem Druckniveau (pac ≥ pacb) mit hoher Drehzahlstufe (nkb = 1)
betrieben wird.

**Claims**

1. An air conditioning system for a preferably air-cooled vehicle with a housing, in which an evaporator, a chamber and at least one fan are arranged, the housing comprising outlet ducts with individually closable defroster-, central- and foot space nozzles, through which hot air and/or cold air can be optionally conveyed into the passenger compartment, and the housing is connected with at least one hot air duct comprising an exhaust gas heat exchanger, a supply duct for fresh air provided with an electromotively controlled fresh air flap, and a supply duct for circulating air, wherein hot air and/or fresh air and/or circulating air or fresh air or circulating air cooled by means of an evaporator of an air conditioning system is suppled together to at least one fan, is circulated and mixed within the fan and the mixed air is then supplied via individual outlet ducts to the passenger compartment, and a blown-out air temperature sensor arranged downstream of the fan tests the temperature deviation (DELTA_T) of the mixed air from a nominal temperature and optionally automatically corrects the position of a temperature mixing flap provided upstream of the fan, more particularly according to DE 38 24 794.1, characterised in that a control device (42) detects a travelling velocity (v) of the motor vehicle, a position (xti) of the temperature mixing flap (9, 9'), a fan rotational speed stage (ng) of the fan (23, 23') and a switching state (ac) of an electromagnetic coupling (37) of a cooling agent compressor (38) and determines and sets a nominal position (xfs) of the fresh air flap (16) as a function of these influencing values (v, xti, ng, ac).

2. An air conditioning system according to claim 1, characterised in that, via a position transmitter (51), the control device (42) detects an actual position (xfi) of the fresh air flap (16) and readjusts the actual position (xfi) to the nominal position (xfs).

3. An air conditioning system according to claim 2, characterised in that the nominal position (xfs) of the fresh air flap (16) is determined via function tables (xfs = f(v, xti, ng, ac)) stored in the control device (42) from the influencing values of travelling velocity (v), the position (xti) of the temperature mixing flap (9, 9'), the fan rotational speed stage (ng) and the switching state (ac) of the electromagnetic coupling (37) of the cooling agent compressor (38).

4. An air conditioning system according to claim 2, characterised in that the nominal position (xfs) of the fresh air flap (16) is determined via characteristic curve zones (xfs = f(v, xti, ng, ac)) reproduced in the control device (42) from the influencing values of travelling velocity (v), the position (xti) of the temperature mixing flap (9, 9'), the fan rotational speed stage (ng) and the switching state (ac) of the electromagnetic coupling (37) of the cooling agent compressor (38).

5. An air conditioning system according to claim 3 or 4, characterised in that, when the temperature mixing flap (9, 9') is fully open (xti = xtmax), the fresh air flap (16) is closed (xfs = 0) independently of the further influencing values (v, ng, ac).

6. An air conditioning system according to at least one of the preceding claims, characterised in that, when the electromagnetic coupling (37) of the cooling agent compressor (38) is switched on (ac = 1) and the temperature mixing flap is closed (xti = 0), the fresh air flap (16) is switched into a first, low position (xfs = xfa).

7.  An air conditioning system according to claim 6, characterised in that, when the electromagnetic coupling (37) of the cooling agent compressor (38) is switched on (ac = 1), the position (xfs) of the fresh air flap (16) is not only independent of the fan rotational speed stage (ng) and closed temperature mixing flap (9, 9') (xti = 0), but also of the travelling velocity (v).

8.  An air conditioning system according to one of the preceding claims, characterised in that, independent of the switching state (ac = 0, ac = 1) of the electromagnetic coupling (37) of the cooling agent compressor (38) and when the temperature mixing flap (9, 9') is partially open (0 < xti < xtmax), the fresh air flap (16) is
    - fully open (xfs = xfmax) at a travelling velocity (v) lying in low velocity range (0 ≤ v < va),
    - is increasingly closed from the fully open position (xfs = xfmax) into a second position (xfi = xfb) at a travelling velocity (v) lying in a middle velocity range (va ≤ v < vb), and
    - is held in the second position (xfi = xfb) at a travelling velocity (v) lying in an upper velocity range (v ≥ vb).

9.  An air conditioning system according to claim 8, characterised in that the position (xfs) of the fresh air flap (16) is independent of the fan rotational speed stage (ng) when the temperature mixing flap (9, 9') is partially open (0 < xti < xtmax).

10. An air conditioning system according to one of the preceding claims, characterised in that, independent of the swithing state (ac = 0, ac = 1) of the electromagnetic coupling (37) of the cooling agent compressor (38) and when the temperature mixing flap (9, 9') is closed (xti = 0), the fresh air flap (16) is
    - fully open (xfs = xfmax) at a travelling velocity (v) lying in a low velocity range (0 ≤ v < va),
    - is increasingly closed from the fully open position (xfs = xfmax) into a second position (xfs(vb) = f(ng)) dependent upon the fan rotational speed stage (ng) at a travelling velocity (v) lying in a middle velocity range (va ≤ v < vb), and
    - is held in the second position (xfs(vb) = f(ng)) dependent upon the fan rotational speed stage (ng) at a travelling velocity (v) lying in an upper velocity range (v ≥ vb).

11. An air conditioning system according to one of the preceding claims, characterised in that, apart from being dependent upon the travelling velocity (v), the second position (xfs(vb) = f(ng)) of the fresh air flap (16) is only dependent upon the fan stage (ng) within a given range (0 ≤ ng < 2) of the said fan stages (ng).

12. An air conditioning system according to claim 10 or 11, characterised in that the second position (xfs (vb) = f (ng)) of the fresh air flap (16) is non-linearly dependent upon the fan rotational speed stage (ng), increases together with the fan rotational speed stage (ng) and reaches the maximum value (xfs (vb) = xfmax) at the end (ng = 2) of the range (0 ≤ ng ≤ 2).

13. An air conditioning system according to at least one of the preceding claims, characterised in that, when the electromagnetic coupling (37) of the cooling agent compressor (38) is switched off, the temperature mixing flap is closed (xti = 0) and at fan rotational speed stages (ng) lying above (ng > 2) the given range of fan rotational speed stages (0 ≤ ng < 2), the fresh air flap (16) is fully open.

14. An air conditioning system according to one of the preceding claims, characterised in that, in a warming-up phase after a cold start of an internal combustion engine (3) of the motor vehicle with a fixed rate of acceleration (dxf/dt), the fresh air flap (16) is guided into its nominal position (xfs).

15. An air conditioning system according to claim 14, characterised in that the control of the fresh air flap (16) is only maintained for a limited period after a cold start.

16. An air conditioning system according to at least one of the preceding claims, characterised in that the control of the temperature mixing flap (9, 9') is effected by the control device (42), and apart from being dependent upon the nominal temperature (ts) and the blown-out air temperature (ta) determined by the blown-out air temperature sensor (34, 34'), the position (xts) of the temperature mixing flap (9, 9') is also dependent upon an internal temperature (ti) determined by a passenger compartment temperature sensor (33) and/or upon an external temperature (ta) determined by an external temperature sensor (36).

17. An air conditioning system according to at least one of the preceding claims, characterised in that the control can be influenced via operating elements (44-50) of an operating unit (43) by arbitrarily adjustable values for the nominal temperature (ts), the fan rotational speed stage (ng), an air distribution in the passenger compartment (22), a selection position (sd) (defrost-operation) for defrosting or demisting vehicle windscreens and a selection position (as) for the operation of a cooling agent compressor (38).

18. An air conditioning system according to claim 17, characterised in that, during defrosting operation
   - the fan stage (ng) is set to its maximum value,
   - a foot space flap (30) and an outlet duct (26) to central nozzles are closed,
   - a nominal temperature (ts) is set to a given value and
   - an electromagnetic coupling (37) of a cooling agent compressor (38) is switched on, so long as an evaporator temperature (tv) lies above a given evaporator temperature value.

19. An air conditioning system according to at least one of the preceding claims, characterised in that the operating unit (43) comprises an operating element for a selection position (su) (circulation operation), the fresh air flap (16) being closed when circulation operation is selected.

20. An air conditioning system according to at least one of the preceding claims, characterised in that a heating fan (6) supplying the hot air-duct (8, 8') is controlled by the control device (42) in two rotational speed stages (nhga, nhgb), wherein, when the ignition (57) of an internal combustion engine (3) of the motor vehicle is switched on,
   - a first rotational speed stage (nhga = 1) is triggered when, with the temperature mixing flap (9, 9') at least partially open (heating operation), the fan is operated at a lower fan rotational speed (ng < 2) or, with the temperature mixing flap (9, 9') closed, when a hot air temperture (tw) determined by a hot air temperature sensor (35) in the hot air duct (8, 8') lies in a low range (twa < tw ≦ twb),
   - a second rotational speed stage (nhgb = 1) is triggered when, with the temperature mixing flap (9, 9') at least partially open (heating operation), the fan is operated at a higher fan rotational speed (ng ≧ 2) or, with the temperature mixing flap (9, 9') closed, when a hot air temperture (tw) determined by a hot air temperature sensor (35) in the hot air duct (8, 8') lies in a high range (tw > twb), and
   - within a given interval (t < tmax) after the ignition (57) has been switched off, the first rotational speed stage (nhga = 1) is triggered when the hot air temperature (tw) exceeds a given threshold (tw > twc).

21. An air conditioning system according to claim 20, characterised in that a monitoring circuit integrated in the control device (42) or influencing the control device (42) monitors a running state of the heating fan (6) and switches the fan (23, 23') off (ng = 0) in the event of a breakdown of the heating fan (6).

22. An air conditioning system according to at least one of the preceding claims, characterised in that, in the event of a breakdown of a sensor (33-36, 40, 51-55), only the control function associated with the said sensor is no longer available in each case or sensor values are replaced by fixed values or are approximated by values of other sensors.

23. An air conditioning system according to at least one of the preceding claims, characterised in that a condensor (20) of the air conditioning system (1) is forcibly ventilated by means of a condensor fan (41) controlled by the control device (42), the condensor fan (41) switching off (nk = 0) when the electromagnetic coupling (37) of the cooling agent compressor (38) is switched off (ac = 0), and when the electromagnetic coupling (37) of the cooling agent compressor (38) is switched on (ac = 1) and
   - in the event of a low pressure level (paca ≦ pac < pacb) determined in the cooling agent circuit of the air conditioning system via a pressure sensor (40, 40') influencing the control device, is operated at a low rotational speed stage (nka = 1), and
   - in the event of a high pressure level (pac ≧ pacb) is operated at a high rotational speed stage (nkb = 1).

**Revendications**

1. Installation de climatisation pour un véhicule refroidi de préférence à l'air comportant un carter dans lequel sont montés un évaporateur, une chambre et au moins un ventilateur, le carter présentant des canaux de sortie avec des buses de dégivrage, des buses centrales et des buses pour la région des pieds, pouvant être fermées individuellement, par lesquelles il est possible d'envoyer au choix de l'air chaud et/ou de l'air froid dans l'habitacle et dans laquelle le carter communique avec au moins un canal d'air chaud, contenant un échangeur de chaleur des gaz d'échappement, ainsi qu'un canal d'arrivée d'air frais pourvu d'un volet d'air frais commandé par un moteur électrique et avec un canal d'arrivée d'air ambiant, l'air chaud et/ou l'air frais et/ou l'air ambiant ou l'air frais ou l'air ambiant, refroidi par un évaporateur d'une installation de climatisation, étant envoyés conjointement au moins vers un ventilateur dans lequel ils sont mis en turbulence et mélangés et l'air mélangé est ensuite envoyé par des canaux de sortie individuels à l'habitacle, et une sonde de température de sortie, placée en aval du ventilateur, interroge l'écart de température (DELTA__T) de l'air mélangé par rapport à une température de consigne et corrige éventuellement automatiquement la position d'un clapet de mélange de températures, prévu en amont du ventilateur, en particulier suivant la DE 38 24 794.1, caractérisée en ce qu'un appareil de commande (42) enregistre une vitesse de marche (v) du véhicule autobile, ainsi qu'une position (xti) du clapet du mélange de températures (9, 9'), un cran de vitesse de rotation (ng) du ventilateur (23, 23') et une position de manoeuvre (ac) d'un accouplement électromagnétique (37) d'un compresseur de réfrigérant (38) et détermine et règle une position de consigne (xfs) du volet d'air frais (16) en fonction de ces grandeurs d'influence (v, xti, ng, ac).

2.  Installation de climatisation selon la revendication 1, caractérisée en ce que l'appareil de commande (42) enregistre, par un capteur de position (51), une position réelle (xfi) du volet d'air frais (16) et en ce que la position réelle (xfi) suit la position de consigne (xfs).

3.  Installation de climatisation selon la revendication 2, caractérisée en ce que la position de consigne (xfs) du volet d'air frais (16) est déterminée à l'aide de tableaux de fonction (xfs = f (v, xti , ng, ac)), mémorisés dans l'appareil de commande (42), à partir des grandeurs d'influence que sont la vitesse de marche (v), ainsi que la position (xti) du clapet du mélange de températures (9, 9'), le cran de vitesse de rotation (ng) du ventilateur et la position de manoeuvre (ac) de l'accouplement électromagnétique (37) du compresseur de réfrigérant (38).

4.  Installation de climatisation selon la revendication 2, caractérisée en ce que la position de consigne (xfs) du volet d'air frais (16) est déterminée à l'aide d'un ensemble de courbes caractéristiques (xfs = f (v, xti , ng, ac)) à partir des grandeurs d'influence que sont la vitesse de marche (v), ainsi que la position (xti) du clapet du mélange de températures (9, 9'), le cran de vitesse de rotation (ng) du ventilateur et la position de manoeuvre (ac) de l'accouplement électromagnétique (37) du compresseur de réfrigérant (38).

5.  Installation de climatisation selon les revendications 3 ou 4, caractérisée en ce que lorsque le clapet de mélange de températures (9, 9') est totalement ouvert (xti = xtmax), le volet d'air frais (16) est fermé (xfs = 0) indépendamment des autres grandeurs d'influence (v, ng, ac).

6.  Installation de climatisation selon l'une au moins des revendications précédentes, caractérisée en ce que le volet d'air frais (16) est commandé dans une première position basse (xsf = xfa) lorsque l'accouplement électromagnétique (37) du compresseur de réfrigérant (38) est enclenché (ac = 1) et lorsque le clapet de mélange de températures est fermé (xti = 0).

7.  Installation de climatisation selon la revendication 6, caractérisée en ce que la position (xfs) du volet d'air frais (16) est indépendante du cran de vitesse de rotation (ng) du ventilateur lorsque l'accouplement électromagnétique (37) du compresseur de réfrigérant (38) est enclenché (ac = 1) et est en plus indépendante de la vitesse de marche (v), lorsque le clapet de mélange de températures (9, 9') est fermé (xti = 0).

8.  Installation de climatisation selon l'une au moins des revendications précédentes, caractérisée en ce que le volet d'air frais (16)
    -   est totalement ouvert (xfs = xfmax) aux vitesses de marche (v) se situant dans une plage de vitesses inférieure (0 ≤ v < va),
    -   partant de la position totalement ouverte (xfs = xfmax), et jusqu'à une deuxième position (xfi = xfb), est de plus en plus fermé aux vitesses de marche (v) se situant dans une plage moyenne de vitesses (va ≤ v < vb),

- est maintenu dans la deuxième position (xfi = xfb) aux vitesses de marche (v) se situant dans une plage supérieure de vitesses (v ≥ vb), indépendamment de la position de manoeuvre (ac = 0, ac = 1) de l'accouplement électromagnétique (37) du compresseur de réfrigérant (38), lorsque le clapet de mélange de températures (9, 9') est partiellement ouvert (0 < xti < xtmax).

9. Installation de climatisation selon la revendication 8, caractérisée en ce que la position (xfs) du volet d'air frais (16) est indépendante du cran de vitesse de rotation (ng) du ventilateur, lorsque le clapet de mélange de températures (9, 9') est partiellement ouvert (0 < xti < xtmax).

10. Installation de climatisation selon l'une au moins des revendications précédentes, caractérisée en ce que le volet d'air frais (16)

- est totalement ouvert (xfs = xfmax) aux vitesses de marche (v) se situant dans une plage de vitesses inférieure (0 ≤ v < va),
- partant de la position totalement ouverte (xfs = xfmax), et jusqu'à une deuxième position dépendant du cran de la vitesse de rotation (ng) du ventilateur (xfs (vb) = f (ng)), est de plus en plus fermé aux vitesses de marche (v) se situant dans une plage moyenne de vitesses (va ≤ v < vb), et
- est maintenu dans la position dépendant du cran de vitesse de rotation (ng) du ventilateur (xfs (vb) = f (ng)) aux vitesses de marche (v) se situant dans une plage supérieure de vitesses (v ≥ vb), indépendamment de la position de manoeuvre (ac = 0, ac = 1) de l'accouplement électromagnétique (37) du compresseur de réfrigérant (38), lorsque le clapet de mélange de températures (9, 9') est fermé (xti = 0).

11. Installation de climatisation selon l'une au moins des revendications précédentes, caractérisée en ce que la deuxième position (xfs (vb) = f (ng)) du volet d'air frais (16) dépend, en dehors de la vitesse de marche (v), du cran du ventilateur (ng), uniquement à l'intérieur d'une plage déterminée (0 ≤ ng < 2) des crans (ng) du ventilateur.

12. Installation de climatisation selon les revendications 10 ou 11, caractérisée en ce que la deuxième position (xfs (vb) = f (ng)) du volet d'air frais (16) dépend de manière non linéaire du cran de vitesse de rotation (ng) du ventilateur et augmente en même temps qu'augmente le cran de vitesse de rotation (ng) du ventilateur et atteint la valeur maximale (xfs (vb) = xfmax) à la fin (ng = 2) de la plage (0 ≤ ng ≤ 2).

13. Installation de climatisation selon l'une au moins des revendications précédentes, caractérisée en ce que le volet d'air frais (16) est totalement ouvert lorsque l'accouplement électromagnétique (37) du compresseur de réfrigérant (38) est déclenché (ac = 0) et lorsque le clapet de mélange de températures est fermé (xti = 0) et pour les crans de vitesse de rotation (ng) du ventilateur qui se situent au-dessus (ng > 2) de la plage déterminée des crans de vitesse de rotation (0 ≤ ng < 2).

14. Installation de climatisation selon l'une au moins des revendications précédentes, caractérisée en ce que le volet d'air frais (16) est guidé dans sa position de consigne (xfs), dans une phase de montée en température après un démarrage à froid d'un moteur à combustion (3) du véhicule automobile, avec une vitesse de variation fixe dans le temps (dxf/dt).

15. Installation de climatisation selon la revendication 14, caractérisée en ce que la commande du volet d'air frais (16) n'est maintenue que pendant un intervalle de temps limité, après un démarrage à froid.

16. Installation de climatisation selon l'une au moins des revendications précédentes, caractérisée en ce que la commande du clapet de mélange de températures (9, 9's) est assurée par l'appareil de commande (42) et la position (xts) du clapet du mélange de températures (9, 9') dépend, en dehors de la température de consigne (ts) et de la température de sortie (ta), déterminée par la sonde de température de sortie (34, 34'), également d'une température intérieure (ti), déterminée au moyen d'une sonde de température d'habitacle (33), et/ou d'une température extérieure (ta), enregistrée par une sonde de température extérieure (36).

17. Installation de climatisation selon l'une au moins des revendications précédentes, caractérisée en ce que la commande peut être influencée par des éléments de commande (44 à 50) d'une unité de commande (43) avec des valeurs réglables arbitrairement pour la température de consigne (ts), le cran de vitesse de rotation (ng) du ventilateur et une distribution d'air dans l'habitacle (22) et une position de sélection (sd) (dégivrage) en vue du dégivrage ou du désembuage des vitres du véhicule, ainsi qu'une position de sélection (as) pour le fonctionnement d'un compresseur de réfrigérant (38).

18. Installation de climatisation selon la revendication 17, caractérisée en ce qu'en dégivrage
    - le cran du ventilateur (ng) est réglé sur sa valeur maximale,
    - un volet de la région des pieds (30) et un canal de sortie (26) menant aux buses centrales sont fermés,
    - une température de consigne (ts) est placée sur une valeur déterminée et
    - un accouplement électromagnétique (37) d'un compresseur de réfrigérant (38) est enclenché, à condition qu'une température d'évaporateur (tv) se situe au-dessus d'une valeur déterminée.

19. Installation de climatisation selon l'une au moins des revendications précédentes, caractérisée en ce que l'unité de commande (43) comporte un élément de commande pour une position de sélection (su) (circulation d'air), le volet d'air frais (16) étant fermé lorsque la circulation d'air est sélectionnée.

20. Installation de climatisation selon l'une au moins des revendications précédentes, caractérisée en ce qu'un ventilateur de chauffage (6), agissant sur le canal d'air chaud (8, 8'), fonctionne, commandé par l'appareil de commande (42), sur deux crans de vitesse de rotation (ngha, nhgb), dans laquelle
    - lorsque l'allumage (57) d'un moteur à combustion (3) du véhicule automobile est enclenché,
    - un premier cran de vitesse de rotation (nhga = 1) est commandé, si le ventilateur (23, 23') fonctionne sur un cran de vitesse de rotation plus bas (ng < 2), alors que le clapet de mélange de températures (9, 9') est partiellement ouvert (chauffage) ou si une température d'air chaud (tw), enregistrée par une sonde de température d'air chaud (35) dans le canal d'air chaud (8, 8'), se situe dans une plage basse (twa < tw ≤ twb), lorsque le clapet de mélange de températures (9, 9') est fermé,
    - un deuxième cran de vitesse de rotation (nhgb = 1) est commandé, si le ventilateur (23, 23') fonctionne sur un cran de vitesse de rotation élevé (ng ≥ 2), alors que le clapet de mélange de températures (9, 9') est partiellement ouvert (chauffage) ou si une température d'air chaud (tw), enregistrée par une sonde de température d'air chaud (35) dans le canal d'air chaud (8, 8'), se situe dans une plage haute (tw > twb), lorsque le clapet de mélange de températures (9, 9') est fermé, et
    - à l'intérieur d'un intervalle de temps déterminé (t < tmax), après coupure de l'allumage (57), le premier cran de vitesse de rotation (nhga = 1) est commandé, si la température d'air chaud (tw) dépasse une valeur limite déterminée (tw > twc).

21. Installation de climatisation selon la revendication 20, caractérisée en ce qu'un circuit de contrôle, intégré à l'appareil de commande (42) ou influençant l'appareil de commande (42), contrôle un état du ventilateur de chauffage (6) et coupe (ng = 0) le ventilateur (23, 23'), en cas de défaillance du ventilateur de chauffage (6).

22. Installation de climatisation selon l'une au moins des revendications précédentes, caractérisée en ce qu'en cas de défaillance d'une sonde (33 à 36, 40, 51 à 55), seule la fonction de commande qui est affectée à chacune, est supprimée ou des valeurs de détection sont remplacées par des valeurs fixes ou approchées par des valeurs d'autres sondes.

23. Installation de climatisation selon l'une au moins des revendications précédentes, caractérisée en ce qu'un condensateur (20) de l'installation de climatisation (1) est ventilé forcé au moyen d'un ventilateur de condensateur (41), commandé par l'appareil de commande (42), le ventilateur de condensateur (41) étant coupé, lorsque l'accouplement électromagnétique (37) du compresseur de réfrigérant (38) est coupé (ac = 0) et, lorsque l'accouplement électromagnétique (37) du compresseur de réfrigérant (38) est enclenché (ac = 1) et
    - à un faible niveau de pression (paca ≤ pac ≤ pacb), fonctionne sur un cran de vitesse de rotation bas (nka = 1),
    - à un niveau de pression élevé (pac ≥ pacb), fonctionne sur un cran de vitesse de rotation élevé (nkb = 1), les niveaux de pression étant enregistrés par un capteur de pression (40, 40'), influençant l'appareil de commande, monté dans le circuit de réfrigérant de l'installation de climatisation.

FIG.1

FIG.2

xfi 51, xtil 52, xtir 53, xlio 54, xlin 55

15, 10', 10, 31, 29, 23', 23, 6, 41

37

58, 59, 60, 61

sxf, sxtl, sxtr, sxlo, sxln, ngl, ngr, nhga, nhgb, nka, nkb, sac

paca, pacb

40', 40, 36, 35, 33, 34, 34'

tv, tw, ti, tar, tal, v

43, 46, 47, 26, 30, 34, 18, °C, AC, 22, 42

49, 50, 48, xlso, xlsu, ts, ac

44, 2, 3, 4, 1, 0, 45, ngs

su, sd

db, esu, kb, ka, zl

62, 63, 57', 57, 56

17

**FIG.3**

$(START) - 64$

$INITIALISATION - 65$

$66 - (A)$

$su, sd, ngs, xlso, xlsu, ts, ac,$
$ze, tal, tar, ti, tw, tv, paca, pacb,$
$xfi, xtil, xtir, xlio, xliu, v - 67$

$xt = f(ts, ta, ti) - 68$

$xf = f(v, xt, ac, ng, su, ze) - 69$

$ng = f(ngs, sd) - 70$

$nhg = f(ze, ng, xti, tw, t) - 71$

$nk = f(ac, pac) - 72$

no $\quad ze = 1? \quad$ 73 yes

$(END) - 74$

FIG.4

BEGIN
xf= f ( v, xt, ac, ng, su, ze )  ～75

69

ze = 1?  ～76
yes / no

su = 1?  ～80
no / yes

xti > 0%?  ～81
no / yes

ac = 0?  ～82
yes / no

xti < 100%?  ～90
no / yes

xfs= f ( v, ng )  ～83

xfs = xfa  ～89

xfs = 0  ～91

xfs= f ( v )  ～92

zta = zta + 1  ～85

84

zta > ztag?  ～86
no / yes

xti < xtia?  ～87
yes / no

xfs = 0  ～77

78

sxf= f ( t, xfs, xfi )  ～88

sxf= ( xfs, xfi )

END
xf = f ( v, xt, ac, ng, su, ze )  ～79

FIG.5

FIG.6

FIG.7

FIG.8

21

FIG.9

BEGIN
nhg = f (ze, ng, xti, tw, t)  —93

ze = 1?  —94  yes / no

xti >0?  —95

tw>twa?  —96

ng<2?  —102

tw>twb?  —99

ztb = 0  —104

B —105

ztb = ztb +1  —106    —103

ztb>ztbg?  —107

tw>twc?  —109

nhga = 1
nhgb = 0  —110

nhga = 0
nhgb = 0  —111

nhga = 0
nhgb = 0  —97

nhga = 1
nhgb = 0  —100

nhga = 0
nhgb = 1  —101

nhga = 0
nhgb = 0  —108

END
nhg = f (ze, ng, xti, tw, t)  —98

—71

EP 0 372 171 B1

EP 0 372 171 B1

FIG.10

BEGIN
nk=f (ac, pac )  ─ 112

72

ac = 1?  ─ 113
yes          no

pac < paca?  ─ 116
no          yes

pac ⩾ pacb?  ─ 117
no          yes

nka = 1
nkb = 0  ─ 118

nka = 0
nkb = 1  ─ 119

nka = 0
nkb = 0  ─ 114

END
nk = f (ac, pac)  ─ 115

23